# EUROPEAN PATENT SPECIFICATION

(11) **EP 4 151 983 B1**
(45) Date of publication and mention of the grant of the patent: **18.12.2024**
(21) Application number: 21198077.6
(22) Date of filing: 21.09.2021
(51) Int. Cl.: G01N 15/02, G01N 15/14, B01D 45/08, G01N 1/22, G01N 15/00

(54) **INERTIAL PARTICLE IMPACTOR**
TRÄGHEITSPARTIKELIMPAKTOR
IMPACTEUR DE PARTICULES INERTIEL

(43) Date of publication of application: 22.03.2023
(73) Proprietor: Saxocon A/S, 2830 Virum (DK)
(72) Inventor: KLING, Kirsten Inga, 2970 Hoersholm (DK); FRIIS-MIKKELSEN, 2830 Virum (DK)
(74) Representative: WSL Patentanwälte Partnerschaft mbB

(56) References cited:
- WO-A2-99/26464
- US-A- 4 590 792
- US-B2- 9 885 640

## Description

### Prior art

The present invention is directed to an inertial particle impactor according to claim 1.

Air pollution by particulate matter (aerosols) has gained a growing attention throughout the recent decades due to its amount and contribution to the global burden of disease. Industrial areas in the 50s and 60s of the 20^{th} century were often covered with visible clouds of dust and other aerosols, which caused substantial risks for diseases, in particular of the respiratory system of human beings and also for the health of animals and plants.

Visible air pollution has been drastically reduced since the 70s and 80s of the past century by means of filters and the application of improved industrial processes, driven by statutory measures. Still, there is a continuous risk of diseases caused by less obvious particulate matter, including particles of even smaller size, i.e. the so called NOAA, i.e. nanomaterials, their aggregates and agglomerates. The development of new technologies and materials has presented new sources of small and ultra-fine particles in ambient air, polluted environments and in particular also in working environments. This includes exhaust gases from vehicles and vessels. Particles in the nano regime may be even more dangerous than the visible dust of the past decades, because these particles are so small that they may enter pulmonary alveoli and pass the barrier between the inhaled air and vasculature, and due to the drastically increased surface area, the nano-forms of material offer a larger reactive area, making them more toxic than their bulk. Apart from airways, any organs may be adversely affected, when inhaled particles are dislocated and entering blood vessels.

It is thus of utmost importance that the presence of such particles in the ambient air and in particular in working environments is detected and characterized in order to take any necessary measures to prevent hazardous effects on humans and or animals. Numerous sources of such particles and the motivation to determine the size and structural and elemental composition of such particles are considered to form common knowledge in this technical field as for instance published in:
Nature/Scientific reports "Improving the foundation for particulate matter risk assessment by individual nano particle statistics from electron microscopy analysis" by Brostroem et al.

Regulations and guidelines in occupational health and safety are currently being established and implemented in the EU, demanding detailed physical-chemical characterization of Nanomaterials, their agglomerates and aggregates. Limit values for certain types of material (e.g. Cr-VI) have been established in various countries, however, existing sampling techniques and established analytical capabilities are neither efficient nor sensitive enough for collecting and analyzing those small amounts. This invention offers and enables sampling of Nanomaterials, their agglomerates and aggregates, including fibers, for the detailed physical-structural and elemental characterization in a (scanning) electron microscope.

International emission regulations on vessels require monitoring of gases, in addition this device can be used to collect particles in exhaust gas plumes being mounted on a drone, helicopter or aircraft.

EP 3 403 065 B1 discloses various types of staggered cascade impactors and is focusing on the coating of impact plates, but is rather silent about the detailed dimensions, geometry and structures of the impactor stages. As regards the detailed geometry and structure, all drawings thereof are of a merely schematic nature, so that the actual geometry and dimensions of the impactor stages may not be determined therefrom. This is possibly due to the fact that this document rather focuses on coatings of the impactor plates and the adjustment of flow rates in order to affect cut off diameters And the D50 size range. D50 indicates the mean particle size on a plate and for an impactor stage is determined by counting an equal number of deposited particles which are either larger or smaller than the D50 value.

More detailed technical information on particle impactors as used in Brostroem et al. and as modified and used according to the present invention can be found in the technical paper: ISSN 1047-3289 J. Air & Waste Manage. Assoc. 55:1858-1865 (2005) by Cheng Hsiun Huang. A similar device is dislosed in WO 99-26464 A1.

Another inertial particle impactor is disclosed in US Patent 9,885,640 B2, which comprises an impact surface facing a nozzle exit, wherein this document is focusing on the adjustabillity of the distance between nozzle exit and impact surface without indicating any particular nozzle diameters.

US Patent 4,590,792 A1 discloses an inertial particle detector, which comprises the features of the preamble of claim 1 and is thus considered to form the closest piece of prior art.

The inertial particle impactor for the deposition of small size particles having a mean diameter of less than 10 µm according to US Patent 4,590,792 A1 and the present invention thus comprise the common features of at least one impactor stage for receiving and passing a stream of ambient gas carrying particles (aerosol) and depositing particles on an impactor plate, such as a TEM-grid, said impactor stage comprising a nozzle element and a grid carrier, wherein the nozzle element includes a funnel shaped inlet and an outlet orifice at the narrow end of the funnel shaped inlet and having a (principally arbitrary) maximum diameter, typically in the range of 1 to 3 mm, the grid carrier providing a support for the grid, which is facing the outlet orifice at the end remote from the funnel shaped inlet, wherein the stream of gas exiting from said outlet orifice impinges on said impactor plate, such as a TEM-grid thereby depositing particles upon said impactor plate or grid, the stream of gas further flowing radially towards axially extending outlet passages arranged about the periphery of said plate or grid support and optionally further flowing towards another nozzle element of any succeeding further impactor stage.

The impactor size is principally not limited in any way, but it is reasonable to keep the dimensions on a convenient level, which means, that the impactor itself could have dimensions in the order of 10 cm in length and 1 to 3 cm in diameter. A complete device including a small vacuum pump and a battery as a power source may thus be a handheld device have the footprint of a mobile telephone with a thickness dimension around 3 cm.

According to the above document by Huang, the space above the impactor plate or grid, when seen along the radial direction, is axially widening from the outlet orifice towards the periphery by a factor of at least five or more, in order to avoid turbulences along the flow path. Indeed, according to Huang et al, the top surface of said space substantially follows the shape of the funnel shaped inlet.

However, the inventor of the present impactor stage has found, that at least for small size particles in the nano regime (more precisely between 100 nm and down to 2.5 nm) the detection and identification of such particles is less effective with such prior art device and does not properly reflect the actual amounts and potential damage which may be caused by the particles actually present in the gas stream passing through the stage. In particular, there may easily occur spots on the plate or grid where numerous particles are accumulated on top of each other, which can thus hardly be distinguished with respect to their morphology and structural and elemental composition, while other substantial areas of the plate or grid are nearly empty and show only very few particles.

### Object of the invention

It is thus the object of the present invention to provide an inertial particle impactor according the preamble of claim 1 and as indicated above, which provides for a more even distribution and a more efficient collection of individual particles on the plate or TEM-grid surface in particular for gas carrying small particles of a mean diameter of less than 1 µm and down to about 2.5 nm.

The focus on smaller size particles does of course not exclude that the device may also be capable to sample particles of a larger mean diameter such as 10 µm.

Regarding the range of particle sizes deposited in a particular stage, the term "size" commonly refers to the so called "aerodynamic diameter" of particles which is defined as the size of a sphere of unit density (specific gravity = 1.0) which has the same falling speed in air as the particle. (cf.: "Fluid flow for the practical engineer" by J. Patrick Abulencia and Louis Theodore j. Wiley & Sons Inc 2009, Chapter 23, "particle Dynamics"). A correction factor is to be applied (cf. Otto G. Raabe (1976) Aerosol Aerodynamic Size Conventions For Inertial Sampler Calibration, Journal of the Air Pollution Control Association, 26:9, 856-860, DOI:10.1080/00022470.1976.10470329)

However, the term "size" as used herein in the context of particles deposited on a TEM grid or plate generally refers to the diameter of a circle covering the same surface area as the deposited particle. Still, once the composition and morphologic structure of the particles on a TEM grid is analyzed by means of electron microscopy, it is possible to provide a reasonable estimation of the respective aerodynamic size range of the deposited particles, if that should be required.

### Summary of the invention

This above object is achieved by an impactor comprising at least one impactor stage which in turn comprises a nozzle element and a plate or grid carrier as stated above, which impactor stage is further characterized by the fact, that the space above the plate or grid and surrounding the orifice outlet is limited by a top surface extending radially at least to and over the passages at the periphery of the plate or grid support which top surface has a maximum axial distance s from the upper surface of the plate or grid, which is less than three times and preferably less than twice the orifice diameter, wherein at least one of said nozzle orifices has a diameter between 0.1 and 0.4 mm, preferably about 0.25 mm, and wherein the plate or grid support (5) is provided as a shallow recess with a planar bottom supporting the plate or grid (6) and arranged to provide a position for the plate or grid with the plate or grid center axis offset relative to the nozzle axis, which offset is between 0.1 and 1.2 times of the orifice diameter.

Alternatively this may be expressed by referring to the distance between the plate or grid supporting surface and the top surface, which is just slightly larger than the distance between the upper surface of the plate or grid and the top surface, namely by the thickness of the plate or grid.

In a preferred embodiment, the top surface is simply planar and parallel to the plate or grid supporting surface. The top surface of the flow space above the plate or grid may simply extend from the lower outer edge formed by the orifice outlet and parallel to the plate or grid surface. The top surface can thus be flush with the orifice exit.

In a preferred embodiment of the inertial particle impactor, the minimum distance between the upper surface of a plate or grid supported by the plate or grid carrier and the top surface is at least 0.2 mm, preferably 0.26 mm, and generally preferred 1.3 times the orifice diameter, in case the latter is larger than 0.2 mm.

The top surface limiting the space above the grid is not necessarily planar. In one embodiment the top surface is slightly conical, such that the distance between grid and top surface is decreasing when going from the nozzle orifice towards the periphery of the periphery of the top surface. In another embodiment, the distance between the top surface and the grid may be varying along the radial and/or circumferential direction, keeping in mind the above maximum and minimum values. In particular, the top surface may be wave shaped in cross section. Preferably, any amplitude of such variation should not exceed 50% of the minimum distance between top surface and grid.

By means of the above-mentioned features, it has turned out that the TEM-grid or corresponding plate which is later on to be investigated by means of an electron microscope, in particular by scanning or also by transmission electron microscopy, that the particles are more evenly distributed over the surface of the grid and still define individual and separable spots which may be individually investigated with regard to the particle size and its structural and elemental composition. In other words, an overload of too many particles, which cannot be distinguished is avoided to a large extent as well as lots of empty areas without any deposited particles.

In order to properly deposit and investigate very small size particles deposited on a TEM-grid or plate, with a D50-value below 100 nm and identifying individual particles down to 10 or even 2.5 nm, including their structural and elemental composition, the orifice diameter of the nozzle element is reduced below 0.5 mm, such as 0.35, 0.25 or even 0.2 mm. It may be technically challenging, but should not be excluded to reduce such diameter below 0.2 mm, such as even 0.1 mm.

Scanning or transmission electron microscopy and thus the use of TEM grids for deposition is the preferred method of investigating the particles with regard to their chemical composition and morphologic structure, and also with regard to the size distribution and range.

The minimum distance between the upper surface of a grid carried by the grid carrier and the top surface (16) is at least 0.2 mm or 1.3 times the orifice diameter, if the latter is equal to or larger than 0.2 mm. Such a minimum distance results in maintaining a minimum radial velocity of the gas stream, which is drastically reduced by the increase of the cross section of the flow along the radial direction, wherein the smaller axial distance between grid and top surface avoids an even stronger deceleration.

Further, in order to avoid any corruption of the data, the first inlet stage (funnel shaped opening 11) should be open to ambient air (or gas in the space to be investigated). In other words, the impactor is not pressurized. Any pressure difference occurring over an impactor stage is merely generated by a vacuum pump at the outlet end of the impactor. This in turn reduces any possible flow rates to less than 5 l/min and even down to 0.5 l/min and lower, when reducing the orifice diameter below 0.5 mm as indicated above, even when the axial length of the orifice is reduced to less than the diameter thereof.

The vacuum pump in the context of this specification refers to a pump which is capable to provide at a closed or nearly closed inlet stage a substantial pressure difference with respect to ambient air and resulting in a reduced pressure below 5 kPa, more preferred below 1 kPa and in particular below 0.1 kPa. The purpose of the pump is to cause a maximum flow rate through the partly rather narrow nozzle orifices under the given environmental conditions. Ambient pressure may vary between 0.1 MPa and for instance less than 50 kPa, when considering measurement on higher mountains or even within in or on airplanes. The flow rates may thus vary over a wide range but are typically well below 5 l/min for a pressure difference of about 0.1 MPa in view of very small orifices required to detect also very small particles of a size below 100 nm and down below 10 nm.

The particles are sampled from ambient air (or gas in a production facility) in any area or room of interest, wherein the outlet end of the inertial particle impactor is connected to a vacuum pump, which is provided for the suction of a gas stream carrying that particles from the ambient air through at least one of the claimed impactor stages, wherein the smallest orifice diameter of said at least one impactor stage is selected such as to provide a velocity of the gas stream above 300 m/s and preferably at about the velocity of sound in the ambient air or even higher, such as 340 m/s. In the preferred embodiment of a multi stage impactor as described in the following detailed description, the velocity of a gas jet (air) expelled from the last stage nozzle element having an orifice diameter of only 0.25 mm, the afore mentioned velocity of about 340 m/s may be reached. This jet impinges on the TEM grid or plate from a distance which is as well only in the order of about 1.3 times the orifice diameter. The widest diameter at the entrance of the funnel shaped inlet may be the same or similar for all impactor stages irrespective of the diameter of its respective nozzle orifice. Typically, the wide end of the funnel shaped inlet has a diameter between 5 mm and 10 mm, such as 7 mm.

The plate or grid carrier is provided with a plate or grid support, which is formed as a shallow recess having a planar bottom supporting the plate or grid, wherein this recess is further arranged to provide a horizontal displacement of the plate or grid center axis with respect to the nozzle axis, which displacement is between up to 0.1 and 3 times the orifice diameter, wherein the larger part of this factor range would apply to the smaller size orifices while the lower part of this range applies to larger orifice diameters. The depth of the recess forming the grid support corresponds to the thickness of the plate or grid to be used.

In general, the impactor plate, such as a TEM-grid, electron microscopy substrate, foil or disposable disc is typically circular but may also be square or elliptical so that in any case a center axis extending perpendicular to the TEM surface is clearly defined. Also, the nozzle orifice is generally circular in cross section even though any other cross-sectional shape might be conceivable but still defines a center axis of the nozzle perpendicular to such cross section.

As a practical matter, it has turned out that even such horizontal displacement or offset alone may already prevent an overload of particles at a spot vis a vis the nozzle axis and also causes a more even distribution of individual particles over the total surface of the grid. This may be due to the fact that the commercially available TEM grids appear to be somewhat more resistant against the impinging gas stream in areas slightly outside the center of the grid. In other words, this measure alone would also solve the object of the invention in part while an even better improvement is of course obtained by the above-indicated limit of the space between the top surface and the grid. This might be less important for orifice diameters above 0.5 mm and small flow rates below 5 l/min or even below 1 l/min, but is definitely effective at the final stages having smaller orifice diameters. It is thus reasonable to have the same or similar offset for the various stages irrespective of the orifice diameter of the nozzle element, which leads to ratios between offset and orifice diameters varying in the range of typically 0.1 to 1.2, sometimes even up to 3, with the larger values applying to nozzle elements having the smaller orifices. Further, this allows to have identical grid carriers for a set of different impactor stages if the offset (measured in absolute values) is the same for all grids and their respective supporting recesses.

In one embodiment, the passages through which the stream of gas is passed after it has flown over the plate or grid surface are extending generally along the axial direction and are arranged diametrically opposed with respect to the nozzle axis. In particular, those passages are defined by an inner radius and an outer radius each extending over an angular range between 120 and 170° about the nozzle axis. The passages may be rounded at their ends in the circumferential direction and radially limited by the above mentioned inner and outer radii so that the passages may be described as having a bean shape or kidney shape. Due to the offset of the plate or grid axis with regard to nozzle axis, at least the inner radius may not be centered exactly about the nozzle axis but rather about the axis of the plate or grid, while the outer radius is basically centered with respect to the nozzle axis. The passages are open towards the bottom of the plate or grid carrier where they may pass the gas stream into an inlet funnel of a next following nozzle element or out of the Impactor from a last impactor stage. In the circumferential direction the passages are separated by two bridges forming the connection between an inner cylinder comprising the actual plate or grid support and an outer cylinder serving as a support of the nozzle element by means of the annular and axially downward projection from the nozzle element, which projection limits the top surface in the radial direction and thus delimits the space between the top surface and the plate or grid in the axial and radial directions.

In a preferred embodiment, there is provided a plurality of impactor stages for receiving the stream of ambient air. In one embodiment, the plurality of impactor stages is arranged as a cascade, where the gas stream emanating from the passages of a preceding one of said impactor stages is passed to and through a funnel shaped inlet of the next succeeding impactor stage, wherein the latter has an orifice of a diameter smaller than that of each preceding impactor stage. In one embodiment, the orifice diameters of four impactor stages may be staggered beginning with a maximum diameter between 3 and 3.5 mm and then stepwise decreasing to the final diameter in a fourth stage which is only 0.25 mm. The first stage may have an even smaller orifice diameter of only 1.5 mm or less, in particles if larger particles in the range 3 to 10 µm are less likely to occur or are less relevant. The ratio between the orifice diameters of the nozzle element of an impactor stage and that of the next following stage may be in the range of 1.2 to 2. Since there is a continuous flow of gas through the stacked impactor stages, it is obvious, that the velocity of the gas stream passing through the nozzle orifice increases from stage to stage, wherein in a corresponding method of sampling particles of a size down to about 2.5 nm, a vacuum pump is provided for the suction of a gas stream carrying said particles through the claimed stages, wherein as a general measure, the smallest orifice diameter is selected such as to provide a velocity of the gas stream above 300 m/s and preferably at about the velocity of sound in the ambient air or higher, such as 340 m/s. Since the inlet of a first stage is open to the ambient atmosphere (or gas in the space to be investigated), the maximum pressure drop to be obtained over a stage may be about 0.1 MPa (1 bar), yielding a gas let velocity in the final stage having an orifice diameter of 0.25 mm, which is close to the velocity of sound, i. e. above 300 m/s. Such high velocities and the short distance between the nozzle orifice and the plate or grid surface cause the deposition of substantial amounts of very small particles (if present in the air stream) down to about 2.5 nm.

In another embodiment, a plurality of nozzles may be arranged side by side in a common plane and optionally the impactor stages may be revolved in said plane to be shifted to a particular position which is common for all of said impactor stages after the appropriate revolving movement.

In general, the orifice of the impactor stages should meet condition l/w = 1 for w > 0.5 mm or l/w < 1, in particular l/w = 0.5, for w < 0.5 mm, where l is the axial length of the orifice and w is the diameter thereof.

As already mentioned, the top surface outside of the nozzle exit is radially limited and surrounded by a peripheral annular projection engaging the upper surface of the plate or grid carrier radially outward of its passages. Accordingly, the axial height of this annular projection defines the axial distance between the plate or grid and the top surface, provided that the plate or grid surface is basically flush with the upper surface of the plate or grid carrier when the nozzle element is resting and mounted on the corresponding plate or grid support.

There is also provided a compact apparatus for sampling particles less than 10 µ*m* and down to about 2.5 nm includes an inertial particle impactor according to claims 1 to 12, the apparatus further including a vacuum pump directly behind a last stage of impactor stages, a battery power source and preferably a timer for switching the vacuum pump on and off in a timely controlled manner, wherein all the aforementioned elements are arranged in a common housing, wherein an inlet of the impactor, which is in general the inlet of a first impactor stage of a cascade of nozzles, is open towards the ambient air (or gas in the space to be investigated).

In a preferred and practically realized embodiment the total apparatus weighs less than 800 grams and takes up special dimensions less than 9x6x19cm, with no lines attached, thus can be carried as a personal sampler or mounted on a drone as well as installed in places with limited space

### Description of preferred embodiments

Further advantages and details of the claimed device and method may become apparent upon the following description of a preferred embodiment in combination with the figures.
- Figure 1: shows four impactor stages of an inertial particle impactor according to the present invention arranged in a cascade and received in a common sleeve.
- Figure 2a-2c: show a nozzle element of one of said stages in perspective view and in a cross section as well as in a top view.
- Figure 3: shows the cross section of another nozzle element corresponding to figure 2c
- Figure 4a- 4d: show a plate or grid carrier in perspective view, top view and two cross sections, respectively
- Figure 5: shows a complete and operable inertial particle impactor device in a common housing together with a vacuum pump, a power source, a timer and a switch

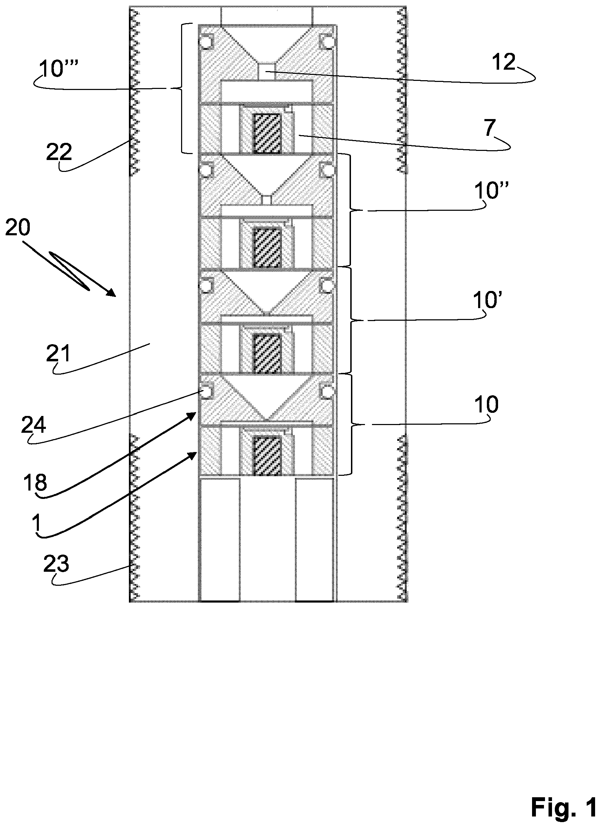

Figure 1 shows an inertial particle impactor 20 comprising a cascade of four impactor stages received within a sleeve 21. Each of the impactor stages 10, 10', 10" and 10‴ is comprised of a nozzle element 18 and a plate or grid carrier 1 arranged immediately below the nozzle element 18. The sleeve 21, the nozzle element 18 and the plate or grid carrier 1 are made from a nonmagnetic material, in particular a nonmagnetic stainless steel.

The impactor stages of the presently described embodiment are designed for carrying a TEM grid.

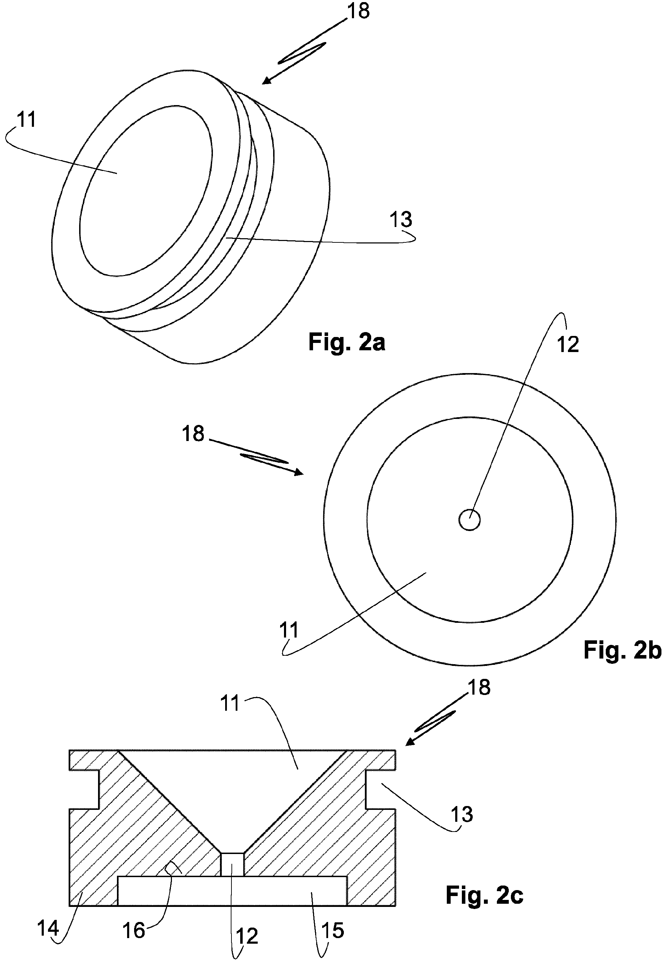

While the nozzle elements 18 in the four different stages are slightly different in the dimensions of the nozzle orifice and the space 15 between the top surface 14 thereof and the upper face of the plate or grid 6, the present description only refers to the nozzle element 18 as shown in figure 2 , while this description would also apply to other nozzle elements in the stages 10', 10", and 10‴, except for the dimensions of their orifices, the spaces 15, and the velocity of a gas stream or jet passing there through

The nozzle element 18, which is better visible in figure 2, comprises a funnel shaped inlet 11 terminating at its narrow end in a cylindrical nozzle orifice12 exiting in a horizontal plane forming a top surface 16 which is radially limited by an annular projection 14, thereby providing a recess 15 forming the space between the upper face of the plate or grid 5 and the top surface. The axial dimension of the space 15 is limited according to the following claims and the preceding description. Sleeve 21 is provided with an upper thread 22 for connecting a sampling tube which is open to the ambient atmosphere and a lower thread 23 for the connection to a vacuum pump 30 for generating a reduced pressure when compared to the ambient atmosphere, which pressure should be below 50 kPa, preferably below 1 kpa or even 0.1 kPa.

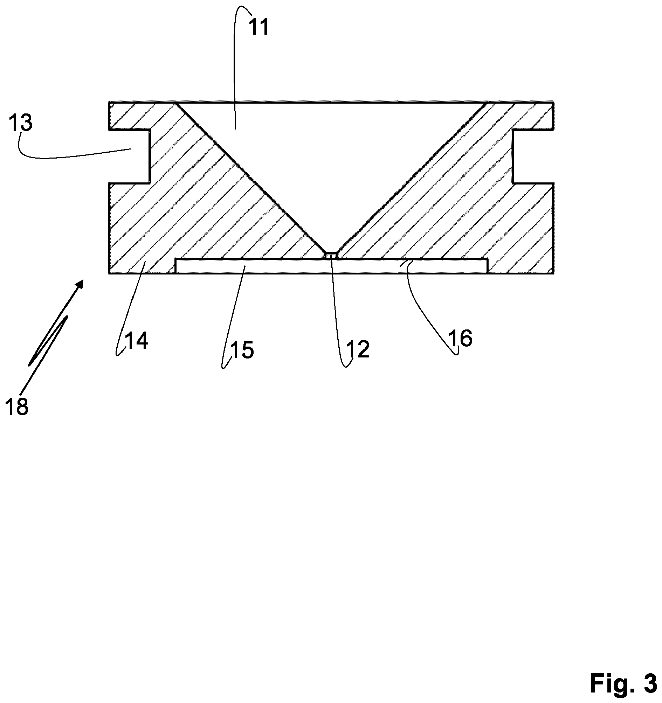

The terms "up", "top" "above" and "below" as used in this specification refer to the arrangement in figure 1. A common axis 25 of symmetry is defined for the nozzle elements which extends through the center of the four different nozzle orifices. Details of the individual stages 10, 10', 10" and 10‴ will now be described with reference to figures 2 and 3.

Figure 2a shows a perspective view of a nozzle element 18 comprising a basically cylindrical outer wall having a circumferential groove for receiving a sealing O-ring 24 (shown in figure 1). The nozzle element 18 comprises a funnel shaped inlet 11 terminating in a cylindrical nozzle orifice 12, shortly referred to as the orifice 12. The planar bottom of the nozzle element 18 around the orifice exit forms the top surface 16 of a space 15 adjacent the orifice exit, which in turn is facing a plate or grid surface of an impactor plate, such as a TEM-grid, electron microscopy substrate, foil or disposable disc 6 which will be described in connection with figure 3. The space 15 between the plate or grid and the top surface 16 is determined by an annular projection 14 extending axially downward from the periphery of the bottom of the nozzle element. This annular projection 14 rests on the top face of grid carrier 1, such that the axial height of the projection 14 defines the distance between the grid 6 and the top surface 16.

Figure 3 is a cross sectional view of another nozzle element 18 which is distinguished from the cross section shown in figure 2c only by the fact, that the nozzle orifice 12 is much smaller in diameter than the nozzle orifice in figure 2c and also the axial height of the projection 14 and thus the corresponding axial dimension of the space 15 (upon mounting the nozzle element onto a grid carrier 1) is reduced. Any other dimensions remain the same as in figure 2c.

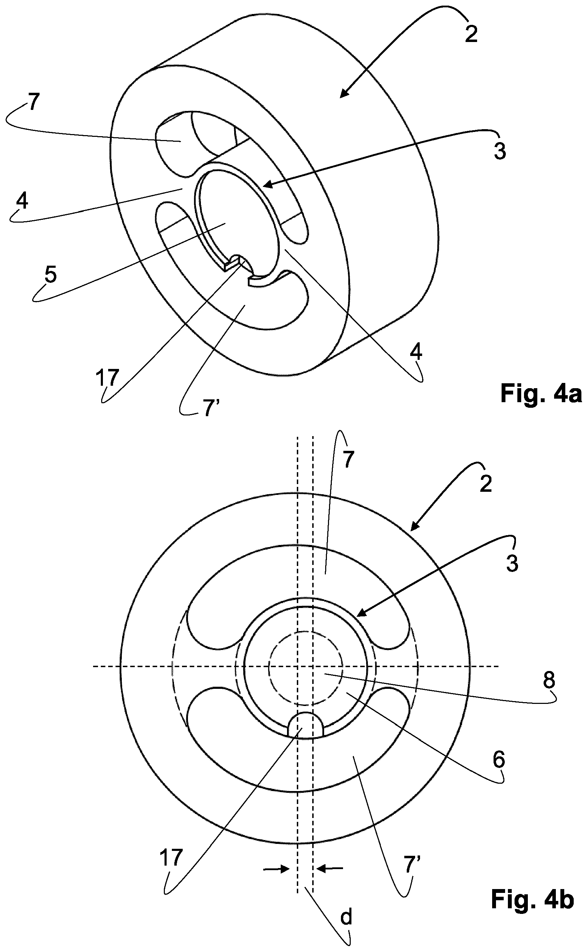

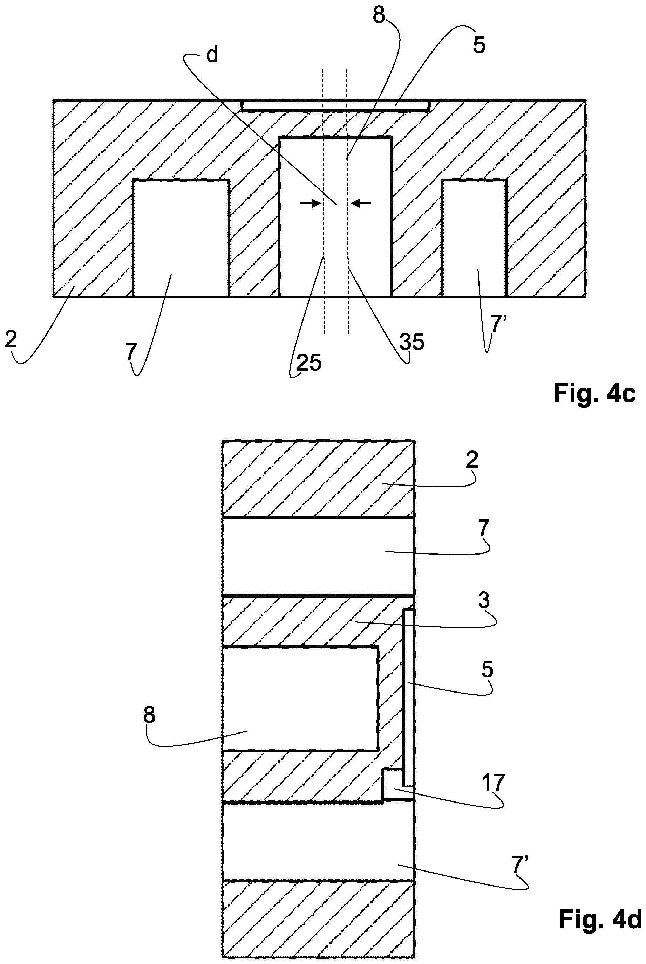

Figures 4a to 4d show the grid carrier 1. As may be seen from figure 4c, the top face 9 of the basically cylindrical grid carrier 1 comprises a nearly central recess 5 for receiving an impactor plate, such as a TEM-grid, electron microscopy substrate, foil or disposable disc 6, the thickness of which corresponds to the axial dimension of the recess 5 such that the upper face of the grid or plate 6 is flush with the top face 9 of the plate or grid carrier 1.

The grid carrier 1, as shown in a perspective view in figure 3a, is actually comprised of an inner cylinder 3 and an outer hollow cylinder 2 surrounding cylinder 3 and being connected thereto by means of two bridges 4. The inner cylinder 3 in turn is also hollow over most of its axial extension from the bottom up to close below the grid support surface, which is provided by said (nearly) central recess 5 on the top face 9. The hollow space 8 below recess 5 accommodates a magnet (see figure 1) which is used to hold a grid 6, when the same is properly arranged within recess 5, wherein the grid 6 is also made of a magnetic material, such as Nickel.

The inner radius of the annular projection 14 basically corresponds to the outer radius r₂ of two passages 7, 7' of the grid carrier 1 which is also the inner radius of the hollow outer cylinder 2. As to be seen in the top view of Figure 3b, the inner cylindrical member 3 having an outer radius r₂ is slightly shifted towards one of the diametrically opposed bridges 4 and thus the axis 35 of inner cylinder 3 including the recess 5 is offset with respect to the axis 25 of the outer cylindrical member 2, which also forms the axis of symmetry for the set of the 4 stacked nozzle elements 18 in figure 1. This offset s also holds for the circular recess 5 receiving the impactor plate, such as a TEM-grid, or any other dismountable or disposable disc 6 which is concentric with regard to the axis 35 of the inner cylinder 3.

Thereby, the gas stream exerting from the orifice 12 impinges not on the center of the grid 6, which for the commercially available TEM grids generally appears to have a slightly less wear resistance and worse coverage than nearby portions of the TEM grid surface. The offset may be in the order of 1/10 to 1/30 of the grid diameter, or of the grid supporting surface, respectively. The latter is slightly recessed in the upper face of the grid carrier (stage) and adapted to the shape and circumference of the grid in order to provide a form fitting plate or grid support. The form fitting support is reasonable when considering the high velocity of gas streams which may be ejected from the nozzle elements, which otherwise might displace the plate or grid 6. For the smallest orifice diameter, the offset d should at least be 1.1 to 3 times the orifice diameter, in order to reduce any wear or ablation in the center of a TEM grid, because the velocity of the gas jet elected from the smallest orifice may reach the velocity of sound in air and is thus more abrasive than the jets emanating from orifices having a larger diameter.

The offset s as such has also proven to provide a more even distribution and less local overload for on the TEM grid surface even without the above claimed limitation of the space above the TEM grid.

According to the cross sectional view in figure 4c, the two bridges 4 connecting the inner and outer cylinders 3, 2, are not extending over the total axial length of the plate or grid carrier 1 and are recessed from the bottom of the grid carrier 1 but still forming a common planar surface 9 with the top surfaces of cylinders 2 and 3, with the exception of the recess 5 for carrying the grid. Another recess 17 is provided for providing an easier access to the grid 6 when mounting or dismounting the same from the carrier and against the action from the magnet in the space 8.

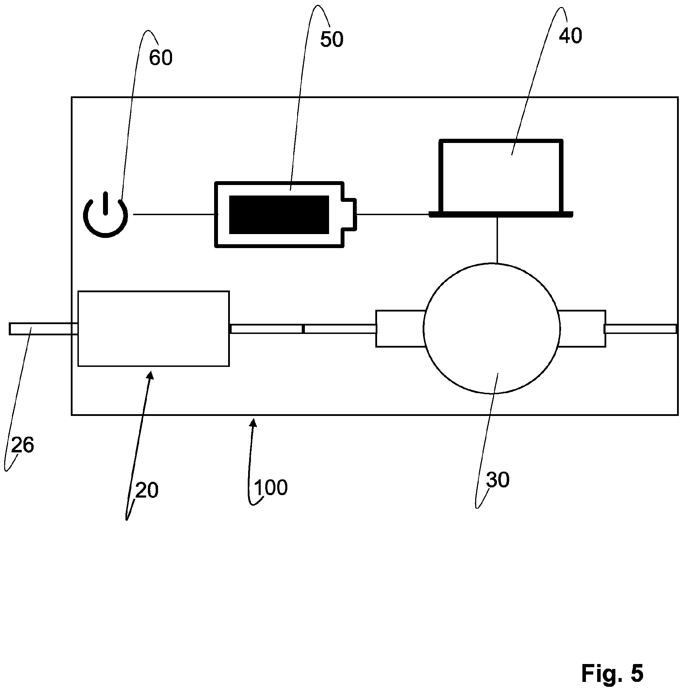

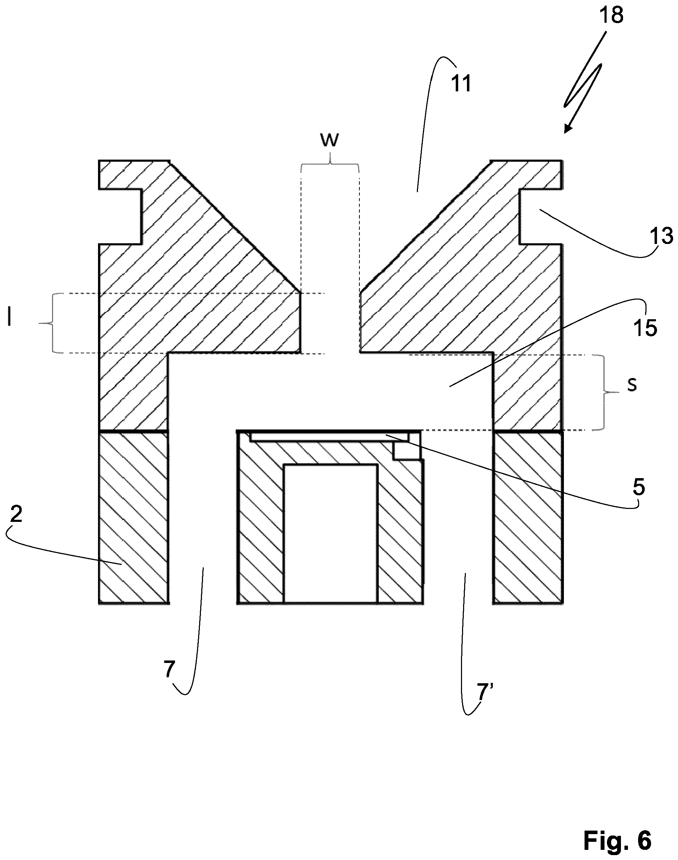

According to figure 1, four impactor stages 10, 10', 10", 10‴ each consisting of a nozzle element 18 and a grid carrier 1 are stacked on top of each other wherein the axial height as well as the orifice diameter of the various stages are different, beginning with the largest axial height and largest orifice diameter in the top impactor stage which height and orifice diameter are then decreasing from stage to stage down to the smallest nozzle diameter of 0.25 mm and the space 15 between an upper plate or grid surface and the limiting top surface is about 0.33 mm. In general, in the shown embodiments, the space 15 has an axial extension of 1.3 times the respective nozzle diameter. Within the sleeve 21, each of the impactor stages 18 is sealed by means of O-rings received in a circumferential groove 13 of each of said nozzle elements 18. The stack of impactor stages 10 is mounted within the sleeve by means of a hollow bottom screw 55, pressing and sealing the individual impactor stages together. The hollow screw 55 is connected to a vacuum pump 30 as shown in Fig. 5. The vacuum pump 30 is driven by a power source in a timely controlled manner by means of a timer relay 40. The whole device is started or stopped by means of a power switch 60. The end of the sleeve 21 extend from one end of a housing 100 receiving the major part of the particle impactor 20, the vacuum pump 30, the timer relay 40 and the power source 50 which may be a rechargeable battery. The time control allows to define precise sampling times for the evaluation and comparison of any results obtained by the electron microscopic investigation of the impactor plate, such as a TEM-grid or disposable disc including the particles deposited thereon.

Fig. 5, which is basically the same figure as Fig. 2a, includes a number designations of measurable details of a nozzle element 18, wherein the below table indicates the relations between the respective dimensions of a preferred embodiment. Of course, all the indicated ratios and dimensions may be changed by at least 50% without substantially affecting the advantages obtained by the present invention.

| | | |
|---|---|---|
| s/w | 1.3 | |
| l/w | 1 | for w > 0.5 |
| l/w | < 1, preferably 0.5 | for w ≤ 0.5 |

### Reference numerals

- 1,: carrier // sleeve
- 2: outer cylindrical member // outer cylinder
- 3: inner cylindrical member // inner cylinder
- 4: bridge
- 5: recess
- 6: plate or grid
- 7, 7': passage
- 8: space for receiving magnet
- 9: planar surface
- 10: impactor stage
- 11: funnel shaped inlet
- 12: cylindrical nozzle orifice
- 13: O-ring groove
- 14: annular projection
- 15: recess // space between plate or grid and top surface
- 16: top surface
- 17: mounting recess
- 18: nozzle element
- 20: particle impactor
- 21: sleeve
- 25: axis of symmetry for the nozzle elements 18
- 30: vacuum pump
- 35: axis of inner cylinder 3
- 40: timer relay
- 50: power source
- 55: hollow bottom screw
- 60: power switch
- 100: housing
- s: distance of outlet oricie to grid surface
- s₁: distance of top surface to grid surface

## Claims

1. Inertial particle impactor (20) for the deposition of small size particles (P) having a mean diameter of less than 10 µm, comprising at least one impactor stage (10) for receiving and passing a stream of ambient gas carrying said particles (aerosol), the impactor stage (10) including a funnel shaped inlet (11) and an outlet orifice (12) at the narrow end of the funnel shaped inlet, an impactor plate, such as a TEM-grid, electron microscopy substrate, foil or disposable disc (6) facing the outlet orifice (12) on the side remote from the funnel shaped inlet (11) and supported at a distance (s) to the outlet orifice (12) by a plate or grid carrier (1), said plate or grid carrier (1) having a support (5) with a planar support surface for the plate or grid (6), the gas stream exiting from said outlet orifice (12), impacting on said plate or grid (6) and passing along the surface substantially radially from said outlet orifice (12), thereby depositing particles (P) upon said plate or grid (6), the stream of gas further flowing through outlet passages (7, 7') arranged at the periphery of said plate or grid support (5) and optionally further passing the gas towards another nozzle inlet of a succeeding further impactor stage (10') of the impactor, wherein the space (15) above the plate or grid (6) and surrounding the outlet orifice (12) is limited by a top surface (16) extending radially at least to the passages (7, 7'),
**characterized by** a maximum axial distance (s₁) from the upper surface of the plate or grid (6) to said top surface, which is less than three times and preferably less than twice the orifice diameter and in that at least one of said outlet orifices has a diameter between 0.1 and 0.4 mm, preferably about 0.25 mm, wherein the impactor plate is supported at a distance (s) to the outlet orifice of less than twice the orifice diameter,
wherein the plate or grid support (5) is provided as a shallow recess with a planar bottom supporting the plate or grid (6) and arranged to provide a position for the plate or grid with the plate or grid center axis offset relative to the nozzle axis, which offset is between 0.1 and 1.2 times of the orifice diameter.

2. Inertial Particle Impactor according to claim 1, **characterized in that** the top surface (16) is a planar surface and optionally flush with the orifice exit.

3. Inertial Particle impactor according to any of claims 1 or 2, **characterized in that** the distance (d) between the top surface (16) and the plate or grid (6) is varying along the radial and/or circumferential direction, and in particular decreasing when going from the outlet orifice (12) to the periphery of the plate or grid.

4. Inertial Particle impactor according to any of claims 1 or 3, **characterized in that** the top surface of the space (15) between the outlet orifice (12) and the plate or grid (6) is wave shaped in a cross section along the radial direction starting out from the outlet orifice (12).

5. Inertial impactor according to any of the preceding claims, **characterized in that** the passages (7, 7') are diametrically opposed with respect to the nozzle axis (25) and are defined by an inner (r₁) and an outer radius (r₂), each extending over an angular range between 140 and 170 degrees about the nozzle axis.

6. Inertial Particle Impactor according to any of the preceding claims, **characterized in that** a plurality of impactor stages is arranged as a cascade, where the gas stream emanating from the passages of a preceding one of said impactor stages (10') is passed to and through a funnel shaped inlet (11) of a succeeding impactor stage (10), the latter having an orifice (12) of a diameter smaller than that of each preceding impactor stage (10).

7. Inertial Particle Impactor according to any of the preceding claims, **characterized in that** a plurality of nozzles is arranged side by side in a common plane, wherein optionally the impactor stages may be revolved in said plane to be shifted to a particular position which is common for all of said impactor stages.

8. Inertial Particle Impactor according to any of the preceding claims, **characterized in that** the orifice meets the condition l/w=1, for w>0.5 mm, or l/w< 1, in particular 0.5 mm if w<0.5 mm, where l is the axial length of the orifice and w is the diameter thereof.

9. Inertial Particle Impactor according to any of the preceding claims, **characterized in that** the top surface (16) is radially limited and surrounded by a peripheral annular projection (14) engaging the upper surface of the plate or grid carrier (1) radially outward of said passages (7, 7'), thereby defining the axial distance between the plate or grid (6) and said top surface (16).

10. Apparatus for sampling particles of a size less than 10 µm and down to about 2.5 nm, said apparatus including an inertial particle Impactor according to any of the preceding claims 1-9, the apparatus further including a vacuum pump (30) directly behind a last stage of impactor stages (10), a battery power source (50) and preferably a timer (40) for switching the vacuum pump (30) on and off in a timely controlled manner, which are all arranged in a common housing (100), an inlet (1) of the Impactor being open to the ambient air or exhaust air.

11. Method of sampling particles of a size less than 10 µm and down to 2,5 nm by means of an inertial particle impactor (20) according to any of claims 1-9, **characterized in that** the inlet of the inertial particle impactor comprising at least one impactor stage, is subjected to the pressure of about 0.1 MPa or less of the ambient gas atmosphere, wherein a vacuum pump is provided for the suction of a gas stream carrying said particles (P) through the at least one of the claimed impactor stages (10) and wherein the number and size of outlet orifices through which the stream of gas passes is selected such, that by providing a vacuum of at most 1kPa, preferably below 0.1 kPa at the outlet end of a last impactor stage, the flow rate obtained is adjusted to less than 5 l/min, preferably less than 1l/min.

12. Method according to claim 11, wherein the smallest orifice diameter of said at least one impactor stage is selected such as to provide a velocity of the gas jet above 300 m/s and preferably at about the velocity of sound in the ambient air or higher, such as 340m/s.

13. Method according to claim 11 or 12, wherein a cascade of impactor stages is used with optionally in a first stage having a diameter of the outlet orifice up to 3.5 mm, further stages having orifice diameters between 0.45 mm and 1.3 mm and a minimum diameter of an orifice between 0.1 and 0.3 mm, preferably at 0.25 mm in a last stage, thereby causing a flow rate of less than 1 l/min at an outlet pressure below 0.1 KPa, in particular about 0.5 l/min.

## Patentansprüche

1. Trägheits-Partikelimpaktor (20) zur Abscheidung kleiner Partikel (P) mit einem mittleren Durchmesser von weniger als 10 µm, umfassend mindestens eine Impaktorstufe (10) zur Aufnahme und zum Durchlassen eines Stroms von Umgebungsgas, das die Partikel (Aerosol) trägt, wobei die Impaktorstufe (10) einen trichterförmigen Einlass (11) und eine Auslassöffnung (12) am schmalen Ende des trichterförmigen Einlasses, eine Impaktorplatte, wie ein TEM-Gitter, ein Elektronenmikroskopiesubstrat, eine Folie oder eine Einwegscheibe (6), die der Auslassöffnung (12) auf der vom trichterförmigen Einlass (11) entfernten Seite zugewandt ist und in einem Abstand (s) zur Auslassöffnung (12) von einer Platte oder einem Gitterträger (1) getragen wird, wobei die Platte oder der Gitterträger (1) eine Auflage (5) mit einer ebenen Auflagefläche für die Platte oder das Gitter (6) aufweist, wobei der Gasstrom aus der Auslassöffnung (12) austritt, auf die Platte oder das Gitter (6) trifft und entlang der Oberfläche im Wesentlichen radial von der Auslassöffnung (12) verläuft, wodurch Partikel (P) auf der Platte oder dem Gitter (6) abgeschieden werden, wobei der Gasstrom Gas weiter durch Auslasskanäle (7, 7') strömt, die am Umfang des Platten- oder Gitterträgers (5) angeordnet sind, und das Gas optional weiter zu einem anderen Düseneinlass einer nachfolgenden weiteren Impaktorstufe (10') des Impaktors geleitet wird, wobei der Raum (15) über der Platte oder dem Gitter (6), der die Auslassöffnung (12) umgibt, durch eine obere Fläche (16) begrenzt ist, die sich radial mindestens bis zu den Durchlässen (7, 7') erstreckt, **gekennzeichnet durch** einen maximalen axialen Abstand (s₁) von der oberen Fläche der Platte oder des Gitters (6) zu der oberen Fläche, der kleiner als das Dreifache und vorzugsweise kleiner als das Zweifache des Öffnungsdurchmessers ist, und **dadurch, dass** mindestens eine der Auslassöffnungen einen Durchmesser zwischen 0,1 und 0, 4 mm, vorzugsweise etwa 0,25 mm, aufweist, wobei der Platten- oder Gitterträger (5) als flache Vertiefung mit einem ebenen Boden ausgebildet ist, der die Platte oder das Gitter (6) trägt und so angeordnet ist, dass er eine Position für die Platte oder das Gitter bereitstellt, wobei die Mittelachse der Platte oder des Gitters relativ zur Düsenachse versetzt ist, wobei der Versatz zwischen dem 0,1- und 1,2-fachen des Öffnungsdurchmessers beträgt.

2. Trägheits-Partikelimpaktor nach Anspruch 1, **dadurch gekennzeichnet, dass** die obere Fläche (16) eine ebene Fläche ist und optional bündig mit dem Düsenausgang abschließt.

3. Trägheits-Partikelimpaktor gemäß einem der Ansprüche 1 oder 2, **dadurch gekennzeichnet, dass** der Abstand (d) zwischen der oberen Fläche (16) und der Platte oder dem Gitter (6) entlang der radialen und/oder Umfangsrichtung variiert und insbesondere abnimmt, wenn man sich von der Auslassöffnung (12) zum Umfang der Platte oder des Gitters bewegt.

4. Trägheits-Partikelimpaktor gemäß einem der Ansprüche 1 oder 3, **dadurch gekennzeichnet, dass** die obere Fläche des Raums (15) zwischen der Auslassöffnung (12) und der Platte oder dem Gitter (6) in einem Querschnitt entlang der radialen Richtung, beginnend von der Auslassöffnung (12), wellenförmig ist.

5. Trägheits-Partikelimpaktor nach einem der vorstehenden Ansprüche, **dadurch gekennzeichnet, dass** die Durchgänge (7, 7') in Bezug auf die Düsenachse (25) diametral gegenüberliegen und durch einen inneren (r₁) und einen äußeren Radius (r₂) definiert sind, die sich jeweils über einen Winkelbereich zwischen 140 und 170 Grad um die Düsenachse erstrecken.

6. Trägheits-Partikelimpaktor nach einem der vorstehenden Ansprüche, **dadurch gekennzeichnet, dass** eine Vielzahl von Impaktorstufen als Kaskade angeordnet ist, wobei der Gasstrom, der aus den Durchgängen einer vorhergehenden Impaktorstufe (10') zu und durch einen trichterförmigen Einlass (11) einer nachfolgenden Impaktorstufe (10) geleitet wird, wobei die letztere eine Öffnung (12) mit einem Durchmesser aufweist, der kleiner ist als der jeder vorhergehenden Impaktorstufe (10).

7. Trägheits-Partikelimpaktor nach einem der vorstehenden Ansprüche, **dadurch gekennzeichnet, dass** eine Vielzahl von Düsen nebeneinander in einer gemeinsamen Ebene angeordnet ist, wobei die Impaktorstufen optional in der Ebene gedreht werden können, um in eine bestimmte Position verschoben zu werden, die für alle Impaktorstufen gleich ist.

8. Trägheits-Partikelimpaktor nach einem der vorstehenden Ansprüche, **dadurch gekennzeichnet, dass** die Öffnung die Bedingung l/w=1 erfüllt, für w>0,5 mm, oder l/w<1, insbesondere 0,5 mm, wenn w<0,5 mm, wobei l die axiale Länge der Öffnung und w deren Durchmesser ist.

9. Trägheits-Partikelimpaktor nach einem der vorstehenden Ansprüche, **dadurch gekennzeichnet, dass** die obere Fläche (16) radial begrenzt und von einem peripheren ringförmigen Vorsprung (14) umgeben ist, der mit der oberen Fläche der Platte oder des Gitterträgers (1) radial außerhalb der Durchgänge (7, 7') in Eingriff steht, wodurch der axiale Abstand zwischen der Platte oder dem Gitter (6) und der oberen Fläche (16) definiert wird.

10. Vorrichtung zur Probenahme von Partikeln mit einer Größe von weniger als 10 µm bis hinunter zu etwa 2,5 nm, wobei die Vorrichtung einen Trägheits-Partikelimpaktor gemäß einem der vorhergehenden Ansprüche 1 bis 9 umfasst, wobei die Vorrichtung ferner eine Vakuumpumpe (30) direkt hinter einer letzten Stufe von Impaktorstufen (10), eine Batterie-Stromquelle (50) und vorzugsweise einen Zeitgeber (40) zum zeitgesteuerten Ein- und Ausschalten der Vakuumpumpe (30), die alle in einem gemeinsamen Gehäuse (100) angeordnet sind, wobei ein Einlass (1) des Impaktors zur Umgebungsluft oder Abluft hin offen ist.

11. Verfahren zur Probenahme von Partikeln mit einer Größe von weniger als 10 µm und bis zu 2,5 nm mittels eines Trägheits-Partikelimpaktors (20) gemäß einem der Ansprüche 1-9, **dadurch gekennzeichnet, dass** der Einlass des Trägheits-Partikelimpaktors, der mindestens eine Impaktorstufe umfasst, dem Druck von etwa 0,1 MPa oder weniger der umgebenden Gasatmosphäre ausgesetzt wird, wobei eine Vakuumpumpe zum Ansaugen eines Gasstroms , der die Partikel (P) durch die mindestens eine der beanspruchten Impaktorstufen (10) trägt, und wobei die Anzahl und Größe der Auslassöffnungen, durch die der Gasstrom strömt, so gewählt wird, dass durch die Bereitstellung eines Vakuums von höchstens 1 kPa, vorzugsweise unter 0,1 kPa, am Auslassende einer letzten Impaktorstufe die erhaltene Durchflussrate auf weniger als 5 l/min, vorzugsweise weniger als 1 l/min, eingestellt wird.

12. Verfahren nach Anspruch 11, wobei der kleinste Öffnungsdurchmesser der mindestens einen Impaktorstufe so gewählt wird, dass eine Geschwindigkeit des Gasstrahls von über 300 m/s und vorzugsweise etwa Schallgeschwindigkeit in der Umgebungsluft oder höher, wie beispielsweise 340 m/s, bereitgestellt wird.

13. Verfahren nach Anspruch 11 oder 12, wobei eine Kaskade von Impaktorstufen verwendet wird, wobei optional in einer ersten Stufe ein Durchmesser der Auslassöffnung von bis zu 3,5 mm, in weiteren Stufen Öffnungsdurchmesser zwischen 0,45 mm und 1,3 mm und Mindestdurchmesser einer Öffnung zwischen 0,1 und 0,3 mm, vorzugsweise bei 0,25 mm in einer letzten Stufe, wodurch eine Durchflussrate von weniger als 1 l/min bei einem Ausgangsdruck unter 0,1 kPa, insbesondere etwa 0,5 l/min, verursacht wird.

## Revendications

1. Impacteur de particules inertiel (20) pour le dépôt de particules de petite taille (P) présentant un diamètre moyen inférieur à 10 µm, comprenant au moins un étage d'impacteur (10) pour recevoir et faire passer un flux de gaz ambiant transportant lesdites particules (aérosol), l'étage d'impacteur (10) incluant une entrée en forme d'entonnoir (11) et un orifice de sortie (12) au niveau de l'extrémité étroite de l'entrée en forme d'entonnoir, une plaque d'impacteur, telle qu'une grille pour TEM, un substrat de microscopie électronique, une feuille ou un disque jetable (6) faisant face à l'orifice de sortie (12) sur le côté éloigné de l'entrée en forme d'entonnoir (11) et supporté par un support de plaque ou de grille (1) à une certaine distance (s) de l'orifice de sortie (12), ledit support de plaque ou de grille (1) présentant un support (5) ayant une surface de support plane pour la plaque ou la grille (6), le flux de gaz sortant dudit orifice de sortie (12) heurtant ladite plaque ou ladite grille (6) et passant le long de la surface sensiblement radialement à partir dudit orifice de sortie (12), en déposant ainsi des particules (P) sur ladite plaque ou ladite grille (6), le flux de gaz continuant en outre à s'écouler à travers des passages de sortie (7, 7') agencés à la périphérie dudit support de plaque ou de grille (5), le gaz passant en outre facultativement vers une autre entrée de buse d'un étage d'impacteur supplémentaire suivant (10') de l'impacteur, dans lequel l'espace (15) au-dessus de la plaque ou de la grille (6) et entourant l'orifice de sortie (12) est limité par une surface supérieure (16) s'étendant radialement au moins jusqu'aux passages (7, 7'),
**caractérisé par** une distance axiale maximale (s₁) de la surface supérieure de la plaque ou de la grille (6) à ladite surface supérieure qui est inférieure à trois fois, et de préférence inférieure à deux fois, le diamètre de l'orifice et en ce qu'au moins un desdits orifices de sortie présente un diamètre compris entre 0,1 et 0,4 mm, de préférence environ égal à 0,25 mm, la plaque d'impacteur étant supportée à une distance (s) de l'orifice de sortie inférieure à deux fois le diamètre d'orifice,
le support de plaque ou de grille (5) étant prévu sous la forme d'un évidement peu profond présentant un fond plan supportant la plaque ou la grille (6) et agencé pour fournir une position de plaque ou de grille avec axe central de la plaque ou de la grille décalé par rapport à l'axe de la buse, ledit décalage étant compris entre 0,1 et 1,2 fois le diamètre de l'orifice.

2. Impacteur de particules inertiel selon la revendication 1, **caractérisé en ce que** la surface supérieure (16) est une surface plane et facultativement au même niveau que la sortie de l'orifice.

3. Impacteur de particules inertiel selon l'une quelconque des revendications 1 ou 2, **caractérisé en ce que** la distance (d) entre la surface supérieure (16) et la plaque ou la grille (6) varie le long de la direction radiale et/ou circonférentielle, et en particulier diminue lorsqu'elle va de l'orifice de sortie (12) à la périphérie de la plaque ou de la grille.

4. Impacteur de particules inertiel selon l'une quelconque des revendications 1 ou 3, **caractérisé en ce que** la surface supérieure de l'espace (15) entre l'orifice de sortie (12) et la plaque ou la grille (6) est en forme d'onde dans une coupe transversale le long de la direction radiale en partant de l'orifice de sortie (12).

5. Impacteur inertiel selon l'une quelconque des revendications précédentes, **caractérisé en ce que** les passages (7, 7') sont diamétralement opposés par rapport à l'axe de buse (25) et sont définis par un rayon intérieur (n) et un rayon extérieur (r₂), chacun s'étendant sur une plage angulaire comprise entre 140 et 170 degrés autour de l'axe de buse.

6. Impacteur de particules inertiel selon l'une quelconque des revendications précédentes, **caractérisé en ce qu'**une pluralité d'étages d'impacteur sont agencés en cascade, où le flux de gaz émanant des passages d'un étage précédent parmi lesdits étages d'impacteur (10') passe vers et à travers une entrée en forme d'entonnoir (11) d'un étage d'impacteur (10) suivant, ce dernier présentant un orifice (12) de diamètre inférieur à celui de chaque étage d'impacteur (10) précédent.

7. Impacteur de particules inertiel selon l'une quelconque des revendications précédentes, **caractérisé en ce qu'**une pluralité de buses sont agencées côte à côte dans un plan commun, dans lequel les étages d'impacteur peuvent facultativement être pivotés dans ledit plan pour être déplacés vers une position particulière qui est commune à tous lesdits étages d'impacteur.

8. Impacteur de particules inertiel selon l'une quelconque des revendications précédentes, **caractérisé en ce que** l'orifice répond à la condition l/w = 1, pour w > 0,5 mm, ou 1/w < 1, en particulier 0,5 mm si w < 0,5 mm, où 1 est la longueur axiale de l'orifice et w est son diamètre.

9. Impacteur de particules inertiel selon l'une quelconque des revendications précédentes, **caractérisé en ce que** la surface supérieure (16) est radialement limitée et entourée par une saillie annulaire périphérique (14) venant en prise avec la surface supérieure du support de plaque ou de grille (1) radialement vers l'extérieur desdits passages (7, 7'), en définissant ainsi la distance axiale entre la plaque ou la grille (6) et ladite surface supérieure (16).

10. Appareil permettant d'échantillonner des particules d'une taille inférieure à 10 µm et jusqu'à environ 2,5 nm, ledit appareil incluant un impacteur de particules inertiel selon l'une quelconque des revendications précédentes 1 à 9, l'appareil incluant en outre une pompe à vide (30) directement derrière un dernier étage des étages d'impacteur (10), une source d'alimentation de batterie (50) et de préférence une minuterie (40) pour allumer et éteindre la pompe à vide (30) de manière commandée dans le temps, tous étant agencés dans un logement commun (100), une entrée (1) de l'impacteur étant ouverte à l'air ambiant ou à l'air d'échappement.

11. Procédé d'échantillonnage de particules d'une taille inférieure à 10 µm et jusqu'à 2,5 nm au moyen d'un impacteur de particules inertiel (20) selon l'une quelconque des revendications 1 à 9, **caractérisé en ce que** l'entrée de l'impacteur de particules inertiel comprenant au moins un étage d'impacteur est soumise à la pression d'environ 0,1 MPa ou moins de l'atmosphère gazeuse ambiante, dans lequel une pompe à vide est prévue pour l'aspiration d'un flux de gaz transportant lesdites particules (P) à travers le ou les étages d'impacteur (10) revendiqués, au moins au nombre de un, et dans lequel le nombre et la taille des orifices de sortie à travers lesquels le flux de gaz passe sont sélectionnés de façon telle qu'en fournissant un vide d'au plus 1 kPa, de préférence inférieur à 0,1 kPa, au niveau de l'extrémité de sortie d'un dernier étage d'impacteur, le débit d'écoulement obtenu est ajusté à moins de 5 1/min, de préférence moins de 1 1/min.

12. Procédé selon la revendication 11, dans lequel le plus petit diamètre d'orifice dudit étage d'impacteur, au moins au nombre de un, est sélectionné de manière à fournir une vitesse du jet de gaz supérieure à 300 m/s, et de préférence à environ la vitesse du son dans l'air ambiant ou plus, comme 340 m/s.

13. Procédé selon la revendication 11 ou 12, dans lequel une cascade d'étages d'impacteur est utilisée, avec facultativement, dans un premier étage présentant un diamètre de l'orifice de sortie jusqu'à 3,5 mm, des étages supplémentaires présentant des diamètres d'orifice entre 0,45 mm et 1,3 mm et un diamètre minimum d'orifice entre 0,1 et 0,3 mm, de préférence à 0,25 mm dans un dernier étage, en provoquant ainsi un débit d'écoulement inférieur à 1 l/min à une pression de sortie inférieure à 0,1 KPa, en particulier d'environ 0,5 1/min.
